# EUROPÄISCHE PATENTANMELDUNG

(11) **EP 0 551 659 A1**
(43) Veröffentlichungstag der Anmeldung: **21.07.1993**
(21) Anmeldenummer: 92122125.5
(22) Anmeldetag: 30.12.1992
(51) Int. Cl.: B60D 1/155, B60D 1/40, B62D 13/02, B62D 53/08

(54) **Kurzkupplung**

(30) Priorität: 11.01.1992 DE 4200519
(71) Anmelder: BPW FAHRZEUGTECHNIK GmbH & CO. KG, D-33104 Paderborn (DE)
(72) Erfinder: Bröckling, Günter, W-4794 Hövelhof (DE); Wenningkamp, Michael, W-4840 Rheda-Wiedenbrück (DE)
(74) Vertreter: Stenger, Watzke & Ring Patentanwälte

(57) **Zusammenfassung**

Gegenstand der Erfindung ist eine Kurzkupplung für Zentralachsanhänger mit einer teleskopierbaren Deichsel (10) aus einem am Anhänger (8) befestigten Außenrohr (11) und einem, eine Zugöse (23) tragenden Innenrohr (12), die über einen Kurbeltrieb (13) gegeneinander bewegbar sind, wobei am vorderen Ende des Innenrohres (12) ein Stirnrad (16) für den Kurbeltrieb (13) und ein damit kämmendes Zahnsegment (17) gelagert sind. Um die Konstruktion zu vereinfachen und das Ankuppeln zu erleichtern wird vorgeschlagen, daß die Zugöse (23) am vorderen Ende des Innenrohres (12) starr befestigt ist, daß die Drehachse des Zahnsegmentes (17) durch den Mittelpunkt der Zugöse (23) geht und daß das Zahnsegment (17) zwischen Zugöse (23) und Stirnrad (16) im Innenrohr (12) mit einem Gleitlager (21) geführt und mit seinen Enden am Zugfahrzeug (1) abgestützt ist.

## Beschreibung

Gegenstand der Erfindung ist eine Kurzkupplung für (Zentralachs-) Anhänger mit einer teleskopierbaren Deichsel aus einem am Anhänger befestigten Außenrohr und einem, eine Zugöse tragenden Innenrohr, die über einen Kurbeltrieb gegeneinander bewegbar sind, wobei am vorderen Ende des Innenrohres ein Stirnrad für den Kurbeltrieb und ein damit kämmendes Zahnsegment gelagert sind.

Kurzkupplungen der vorstehend beschriebenen Gattung für Zentralachsanhänger sind bekannt. Bei diesen Kurzkupplungen sind das Zahnsegment und die Zugöse an einem Träger befestigt, der schwenkbeweglich am vorderen Ende des Innenrohres gelagert ist. Die Drehachse des Zahnsegmentes ist gleichzeitig auch die Drehachse der Zugöse, wobei Zahnsegment und Zugöse auf gegenüberliegenden Seiten ihrer Drehachse angeordnet sind. Bei einer Bewegung des Zahnsegmentes um seine Drehachse wird gleichzeitig auch die Zugöse um ihre Drehachse verschwenkt. Mit dieser Konzeption sind gravierende Nachteile verbunden, denn sie kompliziert das Ankuppeln des Zentralachsanhängers und erfordert zusätzlich Maßnahmen, um eine Bewegung der Zugöse beim Ankuppelvorgang zu blockieren. Der schwenkbeweglich am Innenrohr gelagerte Träger für das Zahnsegment und die Zugöse stützt sich im angekuppelten Zustand beiderseits der Zugöse an Abstützplatten des Zugfahrzeuges ab. Beim Ankuppeln werden diese Abstützplatten gegen den Träger gefahren. Dabei kann sich die Zugöse am Fangmaul des Kupplungsteiles am Zugfahrzeug vorbei bewegen, wenn sie nicht blockiert worden ist. Das Ausrichten und Blockieren der Zugöse erfolgt mittels einer zusätzlichen Vorrichtung, die nach dem Ankuppeln automatisch wieder gelöst werden muß. Abgesehen von diesen zusätzlichen Komplikationen beim Ankuppeln stellen der Träger für das Zahnsegment und die Zugöse, seine Aufhängung und die Blockiereinrichtung ein zusätzliches Gewicht dar, welches das vordere Ende der Deichsel belastet.

Davon ausgehend liegt der Erfindung die **Aufgabe** zugrunde, eine einfach konstruierte Kurzkupplung zu schaffen, die ohne Hilfsmittel wie eine starre Deichsel gekuppelt werden kann.

Als technische **Lösung** wird dafür vorgeschlagen, daß die Zugöse am vorderen Ende des Innenrohres starr befestigt ist, daß die Drehachse des Zahnsegmentes durch den Mittelpunkt der Zugöse geht und daß das Zahnsegment zwischen Zugöse und Stirnrad mit einem Gleitlager im Innenrohr geführt und mit seinen Enden am Zugfahrzeug abgestützt ist.

Mit einer nach dieser technischen Lehre ausgebildeten Kurzkupplung werden ihre Konstruktion und Handhabung beim Ankuppeln drastisch vereinfacht. Die direkte und damit starre Befestigung der Zugöse am vorderen Ende des Innenrohres hat den **Vorteil,** daß die Zugöse nur noch auf der Längsachse der Deichsel bewegt wird und sich beim Ankuppeln nicht mehr am Fangmaul der Kupplung des Zugfahrzeuges vorbei bewegen kann. Die Führung des Zahnsegmentes in einem Gleitlager am vorderen Ende des Innenrohres zwischen Zugöse und Stirnrad hat in Verbindung mit der Anordnung der Drehachse des Zahnsegmentes im Mittelpunkt der Zugöse den **Vorteil,** daß ein besonderer Träger für Zahnsegment und Zugöse und eine zusätzliche Blockiervorrichtung überflüssig geworden sind. Wenn sich das Zahnsegment beim Ankuppeln nicht schon in einer optimalen Lage befinden sollte, wird es mit den Abstützplatten des Zugfahrzeuges in diese optimale Lage hineingeschoben, wobei sich die Zugöse in der Längsachse der Deichsel in Richtung auf das Fangmaul an der Kupplung des Zugfahrzeuges zu bewegt.

Bei einer praktischen Ausführungsform kann das Gleitlager für das Zahnsegment als Kulisse ausgebildet sein, die ein doppel-T-förmiges Profil hat und zum Stirnrad hin offen ist. Das als Kulisse ausgebildete Gleitlager bildet die einzige Aufhängung für das Zahnsegment und muß deshalb so dimensioniert sein, daß es in der Lage ist, das Zahnsegment bei allen Betriebszuständen in der waagerechten Lage sicher zu tragen und zu führen.

Um ein weiches Ankuppeln und ratterfreies Fahren mit der Kurzkupplung zu ermöglichen, wird vorgeschlagen, an den Enden des Zahnsegmentes ballig ausgebildete Puffer zu befestigen, die unverschiebbar an entsprechend geformten Abstützplatten des Zugfahrzeuges abgestützt sind. Zur Stabilisierung kann das Zahnsegment zusätzlich auch noch am Fangmaul des Zugfahrzeuges abgestützt sein.

Weitere Einzelheiten und Vorteile ergeben sich aus der nachfolgenden Beschreibung der zugehörigen Zeichnungen, in denen eine bevorzugte Ausführungsform einer erfindungsgemäß ausgebildeten Kurzkupplung schematisch dargestellt worden ist. In den Zeichnungen zeigen:
- Fig. 1: Einen Lastzug mit Zentralachsanhänger und Kurzkupplung in Seitenansicht;
- Fig. 2: eine Kurzkupplung am vorderen Ende einer Deichsel in der Stellung für Geradeausfahrt in Seitenansicht;
- Fig. 3: dieselbe Kurzkupplung in Draufsicht;
- Fig. 4: dieselbe Kurzkupplung in einer Stellung für Kurvenfahrt in Draufsicht;

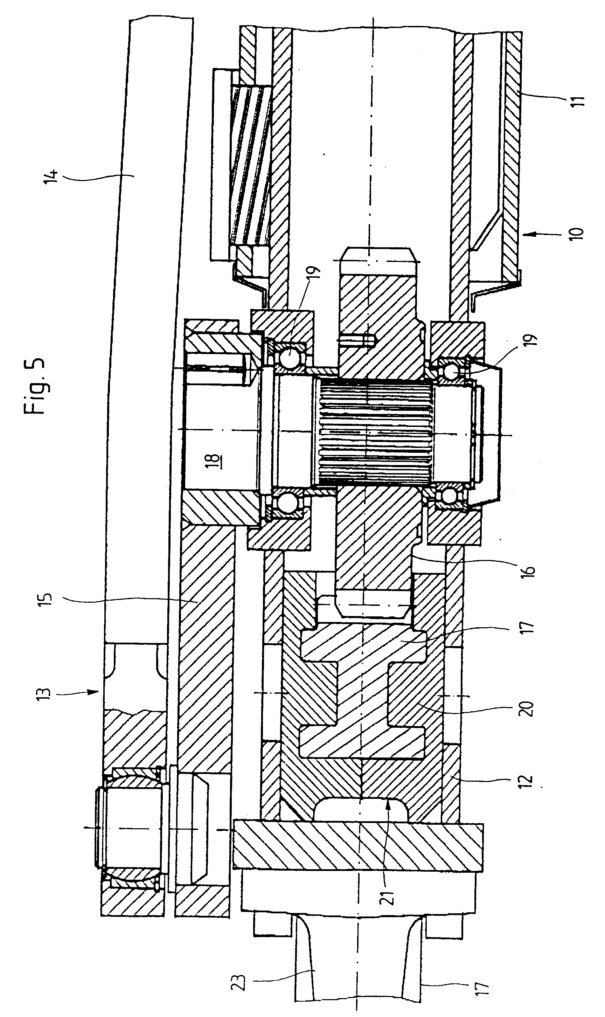

- Fig. 5: eine vergrößerte Darstellung eines Getriebes der Kurzkupplung entlang der Linie V-V in Fig. 3 geschnitten in Seitenansicht.

Unter dem Heck eines Zugfahrzeuges 1 ist nach vorne versetzt am Fahrzeugrahmen 2 ein Stützbock 3 mit seitlichen Abstützplatten 4 befestigt. An einer Quertraverse 5 ist in der Mitte eine Kupplung 6 mit einem Fangmaul 7 befestigt.

Unter einem Zentralachsanhänger 8 ist am Fahrzeugrahmen 9 vorne eine teleskopierbare Deichsel 10 starr befestigt. Die Deichsel 10 besteht aus einem am Zentralachsanhänger 8 befestigten Außenrohr 11 und einem darin verschiebbar angeordneten Innenrohr 12. Zwischen dem Außenrohr 11 und dem Innenrohr 12 ist ein Kurbeltrieb 13 angeordnet, der aus einer am Außenrohr 11 schwenkbar gelagerten Steuerstange 14, einem daran gelagerten Exzenterhebel 15, einem im Innenrohr 12 gelagerten Stirnrad 16 und einem damit kämmenden Zahnsegment 17 besteht.

Der mit einem Ende an der Steuerstange 14 gelagerte Exzenterhebel 15 ist drehfest auf einer Welle 18 für das Stirnrad 16 befestigt. Die Welle 18 ist mit Wälzlagern 19 im Innenrohr 12 gelagert.

Im vorderen Ende des Innenrohres 12 ist ein als Kulisse mit doppel-T-förmigem Profil ausgebildetes Gleitlager befestigt. Das in dem Gleitlager 21 angeordnete Zahnsegment 17 hat ebenfalls ein doppel-T-förmiges Profil und kämmt mit dem Stirnrad 16.

Auf einer Stirnwand 22 ist eine Zugöse 23 befestigt, deren Mittelpunkt auf einer Drehachse 24 des Zahnsegmentes 17 liegt.

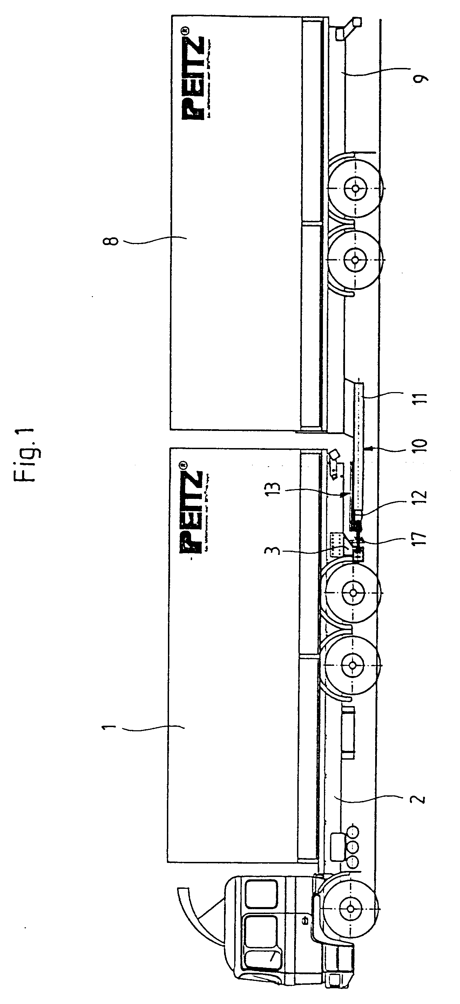

Bei dem in der Fig. 1 dargestellten, angekuppelten Zustand ist die Zugöse 23 im Fangmaul 7 der Kupplung 6 des Zugfahrzeuges 1 angekuppelt. Das Zahnsegment 17 stützt sich mit ballig ausgebildeten Puffern 25 an den Stützplatten 4 des Stützbockes 3 unter dem Zugfahrzeug 1 ab.

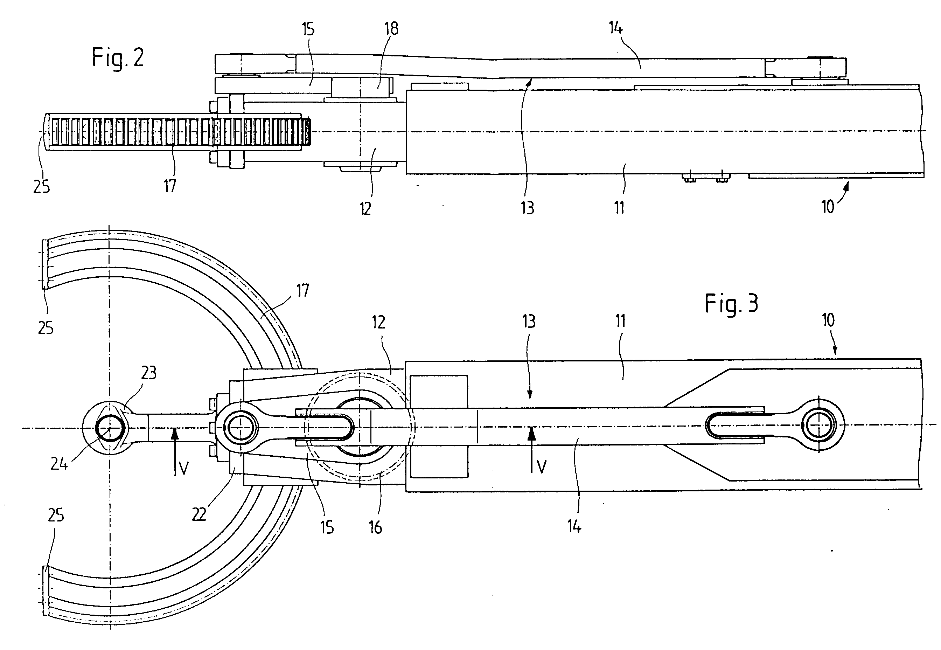

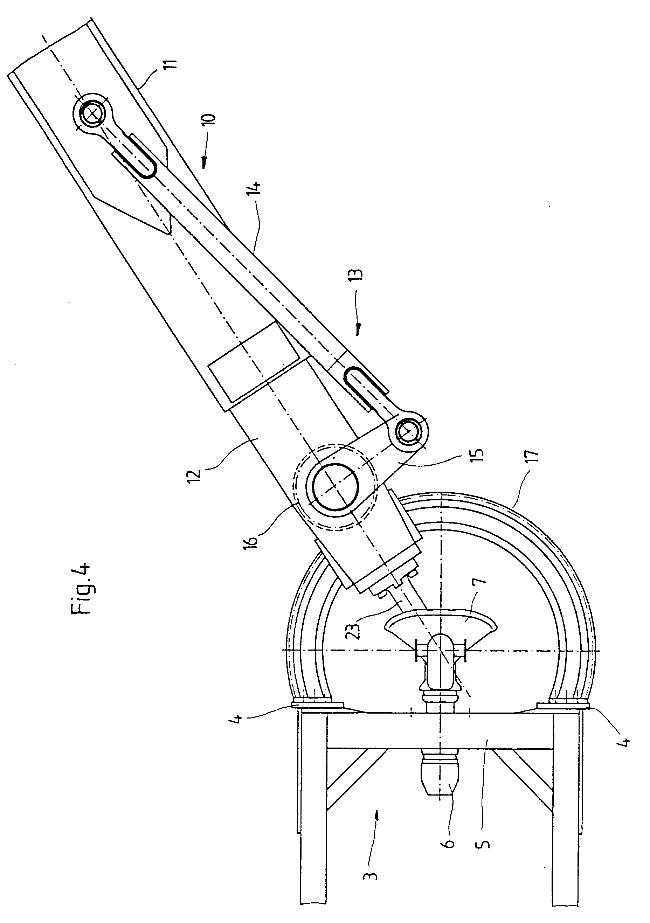

In den Fig. 2 und 3 ist diese Kupplungslage für die Geradeausfahrt dargestellt. Beschreibt nun das Zugfahrzeug 1 eine Kurvenfahrt nach rechts, dann bewegt sich die Kurzkupplung in die in der Fig. 4 dargestellte Winkellage. Dabei wird die Deichsel 10 um den Mittelpunkt der Zugöse 23 horizontal geschwenkt. Gleichzeitig wird das Zahnsegment 17 durch das Gleitlager 21 im Innenrohr 12 geschoben und dreht das Stirnrad 16 des Kurbeltriebes 13. Der Kurbeltrieb 13 verlängert dabei die Deichsel 10, so daß sich das Heck des Zugfahrzeuges 1 und der Bug des Zentralachsanhängers 8 voneinander wegbewegen, um eine Kollision an den Ecken zu vermeiden. Beim Einschwenken in die Geradeausfahrt wird die Deichsel 10 wieder verkürzt, so daß die Gesamtlänge des Lastzuges sich wieder auf die gesetzlich vorgeschriebene maximale Länge verkürzt.

### Bezugszeichenliste

- 1: Zugfahrzeug
- 2: Fahrzeugrahmen
- 3: Stützbock
- 4: Abstützplatte
- 5: Quertraverse
- 6: Kupplung
- 7: Fangmaul
- 8: Zentralachsanhänger
- 9: Fahrzeugrahmen
- 10: Deichsel
- 11: Außenrohr
- 12: Innenrohr
- 13: Kurbeltrieb
- 14: Steuerstange
- 15: Exzenterhebel
- 16: Stirnrad
- 17: Zahnsegment
- 18: Welle
- 19: Wälzlager
- 20: Kulisse
- 21: Gleitlager
- 22: Stirnwand
- 23: Zugöse
- 24: Drehachse
- 25: Puffer

## Patentansprüche

1. Kurzkupplung für (Zentralachs-) Anhänger mit einer teleskopierbaren Deichsel aus einem am Anhänger befestigten Außenrohr (11) und einem, eine Zugöse (23) tragenden Innenrohr (12), die (11,12) über einen Kurbeltrieb (13) gegeneinander bewegbar sind, wobei am vorderen Ende des Innenrohres (12) ein Stirnrad (16) für den Kurbeltrieb (13) und damit kämmendes Zahnsegement (17) gelagert sind,
**dadurch gekennzeichnet,**
daß die Zugöse (23) am vorderen Ende des Innenrohres (12) starr befestigt ist,
daß die Drehachse des Zahnsegmentes (17) durch den Mittelpunkt der Zugöse (23) geht und
daß das Zahnsegment (17) zwischen Zugöse (23) und Stirnrad (16) im Innenrohr (12) mit einem Gleitlager (21) geführt und mit seinen Enden am Zugfahrzeug (1) abgestützt ist.

2. Kurzkupplung nach Anspruch 1, dadurch gekennzeichnet, daß das Gleitlager (21) als Kulisse (20) ausgebildet und zum Stirnrad (16) hin offen ist.

3. Kurzkupplung nach Anspruch 1, dadurch gekennzeichnet, daß das Gleitlager (21) ein doppel-T-förmiges Profil hat und das Zahnsegment (17) darin ebenfalls mit einem doppel-T-förmigen Profil geführt ist.

4. Kurzkupplung nach Anspruch 1, dadurch gekennzeichnet, daß das Zahnsegment (17) unverschiebbar an Abstützplatten (4) des Zugfahrzeuges (1) abgestützt ist.

5. Kurzkupplung nach Anspruch 1, dadurch gekennzeichnet, daß das Zahnsegment (17) zusätzlich am Fangmaul (7) des Zugfahrzeuges (1) abgestützt ist.
